(19)

Europäisches
Patentamt

European
Patent Office

Office européen
des brevets

(11)  **EP 4 685 712 A1**

(12)  **EUROPEAN PATENT APPLICATION**
published in accordance with Art. 153(4) EPC

(43) Date of publication:
**28.01.2026   Bulletin 2026/05**

(21) Application number: **24787763.2**

(22) Date of filing: **18.01.2024**

(51) International Patent Classification (IPC):
*G06N 20/00* (2019.01)

(52) Cooperative Patent Classification (CPC):
**G06N 20/00**

(86) International application number:
**PCT/CN2024/073076**

(87) International publication number:
**WO 2024/212657 (17.10.2024 Gazette 2024/42)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:  **10.04.2023   CN 202310413264**

(71) Applicant: **Shenzhen Yinwang Intelligent
Technologies Co., Ltd.
Shenzhen, Guangdong 518110 (CN)**

(72) Inventors:
• **HE, Xu**
  **Shenzhen, Guangdong 518129 (CN)**

• **LI, Dong**
  **Shenzhen, Guangdong 518129 (CN)**
• **SUN, Hao**
  **Shenzhen, Guangdong 518129 (CN)**
• **LI, Juncheng**
  **Shenzhen, Guangdong 518129 (CN)**
• **CHENG, Siyuan**
  **Shenzhen, Guangdong 518129 (CN)**
• **HAO, Jianye**
  **Shenzhen, Guangdong 518129 (CN)**

(74) Representative: **Gill Jennings & Every LLP
The Broadgate Tower
20 Primrose Street
London EC2A 2ES (GB)**

(54)  **METHOD AND APPARATUS FOR TRAINING DECISION-MAKING MODEL, DEVICE, MEDIUM AND PROGRAM PRODUCT**

(57)    Embodiments of the present disclosure relate to the computer field and provide a method, an apparatus, a device, a medium, and a program product for training a decision model. The method includes: determining, based on training data, a first policy by using a supervised learning model in a decision model, and determining a second policy by using a reinforcement learning model in the decision model (510). The method further includes: determining an imitation learning loss based on a difference between the first policy and the second policy (520). The method further includes: training the decision model based on the imitation learning loss and a reinforcement learning loss corresponding to the second policy (530). In this manner, based on both the imitation learning loss and the reinforcement learning loss, a human-like decision model with excellent performance may be obtained through training by combining a capability of supervised learning using expert data and a characteristic of strong generalization of reinforcement learning. In some embodiments, according to the solution of the present disclosure, a decision model applied to the autonomous driving field may be obtained through training, to provide a policy such as lane-changing.

FIG. 5

**EP 4 685 712 A1**

## Description

This application claims priority to Chinese Patent Application No. 202310413264.9, filed with the China National Intellectual Property Administration on April 10, 2023 and entitled "METHOD, APPARATUS, DEVICE, MEDIUM, AND PROGRAM PRODUCT FOR TRAINING DECISION MODEL", which is incorporated herein by reference in its entirety.

## TECHNICAL FIELD

Embodiments of the present disclosure mainly relate to the computer field. More specifically, embodiments of the present disclosure relate to a method, an apparatus, a device, a computer-readable storage medium, and a computer program product for training a decision model.

## BACKGROUND

Currently, decision models using artificial intelligence are widely used in fields such as autonomous driving, recommendation decision management, and robot control decision management. For example, in the autonomous driving field, a decision model may be used to determine driving behaviors such as lane-changing and braking based on road conditions, to implement autonomous driving. However, training of a decision model applicable to a complex scenario is difficult. In some examples, a large amount of expert data needs to be collected to train a supervised learning-based decision model. In some other examples, for a reinforcement learning-based decision model, complex reward functions need to be constructed, to learn decision experience. Therefore, there is a need for a solution for training a decision model, to train a human-like decision model with excellent performance.

## SUMMARY

Embodiments of the present disclosure provide a solution for training a decision model.

According to a first aspect of the present disclosure, a method for training a decision model is provided. The method includes: determining, based on training data, a first policy by using a supervised learning model in a decision model, and determining a second policy by using a reinforcement learning model in the decision model; determining an imitation learning loss based on a difference between the first policy and the second policy; and training the decision model based on the imitation learning loss and a reinforcement learning loss corresponding to the second policy.

In this manner, based on both the imitation learning loss and the reinforcement learning loss, a human-like decision model with excellent performance may be obtained through training by combining a capability of supervised learning using expert data and a characteristic of strong generalization of reinforcement learning. In some embodiments, according to the solution of the present disclosure, a decision model applied to the autonomous driving field may be obtained through training, to provide a policy such as lane-changing.

In some embodiments of the first aspect, training the decision model based on the imitation learning loss and the reinforcement learning loss corresponding to the second policy includes: determining an adaptive weight for the imitation learning loss; determining an overall learning loss based on the adaptive weight, the imitation learning loss, and the reinforcement learning loss; and training the decision model by minimizing the overall learning loss.

In some embodiments of the first aspect, determining the adaptive weight for the imitation learning loss includes: determining an initial weight for the imitation learning loss; before a predetermined training epoch is reached, updating the initial weight based on a change of the imitation learning loss, to determine an updated weight; and after the predetermined training epoch is reached, gradually decreasing the updated weight.

In some embodiments of the first aspect, updating the initial weight based on the change of the imitation learning loss includes: if the imitation learning loss of an initial training epoch is less than the imitation learning loss of a subsequent training epoch, increasing the initial weight; and if the imitation learning loss of an initial training epoch is greater than the imitation learning loss of a subsequent training epoch, maintaining the initial weight.

In this manner, based on the adaptive weight, the reinforcement learning model can focus more on "imitation" of a human policy in an early stage of training, and focus more on free exploration in a later stage of training, to obtain a decision network combining advantages of both supervised learning and reinforcement learning.

In some embodiments of the first aspect, determining the imitation learning loss based on the difference between the first policy and the second policy includes: normalizing the first policy and the second policy; and determining the imitation learning loss based on a normalized distance between the first policy and the second policy.

In some embodiments of the first aspect, the method further includes: training the supervised learning model based on labeled expert data; determining inference performance of the supervised learning model trained based on the expert data, where the inference performance indicates prediction policy quality for each of a plurality of decision scenarios; and determining, based on the inference performance of the supervised learning model, distribution of data that is in the training data and that corresponds to the plurality of decision scenarios.

In some embodiments of the first aspect, the method further includes: determining inference performance of the reinforcement learning model, where the inference performance indicates prediction policy quality for each of a plurality of decision scenarios; updating, based on the inference performance of the reinforcement learning model, distribution of data that is in the training data and that corresponds to the plurality of decision scenarios, to determine updated training data; and training the decision model based on the updated training data.

In this way, distribution of data that is in the training data and that is for a decision scenario can be dynamically adjusted, thereby improving inference performance of the decision model for a specific decision scenario.

In some embodiments of the first aspect, the method further includes: generating at least a part of the training data by using a simulator. In some embodiments, generating at least the part of the training data by using the simulator includes: generating, by using the simulator based on at least one of a policy determined by the reinforcement learning model or a random policy, a behavior corresponding to at least one of the policy or the random policy as at least a part of the training data. In this way, the simulator can be used to increase a training data amount.

In some embodiments of the first aspect, training the decision model includes: determining a supervised learning loss corresponding to the first policy; and training the decision model based on the imitation learning loss, the reinforcement learning loss, and the supervised learning loss.

In some embodiments of the first aspect, the method further includes: determining a driving policy based on driving-related input data by using the trained decision model or the trained reinforcement learning model, where the driving policy includes at least one of the following: left lane-changing, right lane-changing, going straight, overtaking, left-turn, right-turn, parking, acceleration, deceleration, and braking.

According to a second aspect of the present disclosure, an apparatus for training a decision model is provided. The apparatus includes: a policy determining unit, configured to determine, based on training data, a first policy by using a supervised learning model in a decision model, and determine a second policy by using a reinforcement learning model in the decision model; a loss determining unit, configured to determine an imitation learning loss based on a difference between the first policy and the second policy; and an optimization unit, configured to train the decision model based on the imitation learning loss and a reinforcement learning loss corresponding to the second policy.

In some embodiments of the second aspect, the optimization unit is further configured to: determine an adaptive weight for the imitation learning loss; determine an overall learning loss based on the adaptive weight, the imitation learning loss, and the reinforcement learning loss; and train the decision model by minimizing the overall learning loss.

In some embodiments of the second aspect, the optimization unit is further configured to: determine an initial weight for the imitation learning loss; before a predetermined training epoch is reached, update the initial weight based on a change of the imitation learning loss, to determine an updated weight; and after the predetermined training epoch is reached, gradually decrease the updated weight.

In some embodiments of the second aspect, the optimization unit is further configured to: if the imitation learning loss of an initial training epoch is less than the imitation learning loss of a subsequent training epoch, increase the initial weight; and if the imitation learning loss of an initial training epoch is greater than the imitation learning loss of a subsequent training epoch, maintain the initial weight.

In some embodiments of the second aspect, the apparatus further includes a training data determining unit. The training data determining unit is configured to: train the supervised learning model based on labeled expert data; determine inference performance of the supervised learning model trained based on the expert data, where the inference performance indicates prediction policy quality for each of a plurality of decision scenarios; and determine, based on the inference performance of the supervised learning model, distribution of data that is in the training data and that corresponds to the plurality of decision scenarios.

In some embodiments of the second aspect, the apparatus further includes a simulator using unit. The simulator using unit is configured to: generate at least a part of the training data by using a simulator. In some embodiments of the second aspect, the simulator using unit is further configured to: generate, by using the simulator based on at least one of a policy determined by the reinforcement learning model or a random policy, a behavior corresponding to at least one of the policy or the random policy as at least a part of the training data.

In some embodiments of the second aspect, the apparatus further includes a directional optimization unit. The directional optimization unit is configured to: determine inference performance of the reinforcement learning model, where the inference performance indicates prediction policy quality for each of a plurality of decision scenarios; update, based on the inference performance of the reinforcement learning model, distribution of data that is in the training data and that corresponds to the plurality of decision scenarios, to determine updated training data; and train the decision model based on the updated training data.

In some embodiments of the second aspect, the loss determining unit is further configured to: normalize the first policy and the second policy; and determine the imitation learning loss based on a normalized distance between the first policy and the second policy.

In some embodiments of the second aspect, the optimization unit is further configured to: determine a supervised learning loss corresponding to the first policy; and train the decision model based on the imitation learning loss, the reinforcement learning loss, and the supervised learning loss.

In some embodiments of the second aspect, the apparatus further includes a decision model using unit. The decision model using unit is configured to: determine a driving policy based on driving-related input data by using the trained decision model or the trained reinforcement learning model, where the driving policy includes at least one of the following: left lane-changing, right lane-changing, going straight, overtaking, left-turn, right-turn, parking, acceleration, deceleration, and braking.

According to a third aspect of the present disclosure, an electronic device is provided. The electronic device includes: at least one computing unit; and at least one memory, where the at least one memory is coupled to the at least one computing unit and stores instructions executed by the at least one computing unit; and when the instructions are executed by the at least one computing unit, the device is enabled to implement the method according to the first aspect.

According to a fourth aspect of the present disclosure, a computer-readable storage medium is provided. The computer-readable storage medium stores a computer program, and the computer program is executed by a processor to implement the method according to the first aspect.

According to a fifth aspect of the present disclosure, a computer program product is provided. The computer program product includes computer-executable instructions; and when the instructions are executed by a processor, some or all steps of the method according to the first aspect are implemented.

It may be understood that the electronic device according to the third aspect, the computer-readable storage medium according to the fourth aspect, or the computer program product according to the fifth aspect is configured to perform at least a part of the method according to the first aspect. Therefore, the explanations or descriptions of the first aspect are also applicable to the second aspect, the third aspect, the fourth aspect, and the fifth aspect. In addition, for beneficial effect that can be achieved in the second aspect, the third aspect, the fourth aspect, and the fifth aspect, refer to the beneficial effect in the corresponding method. Details are not described herein again.

## BRIEF DESCRIPTION OF DRAWINGS

With reference to the accompanying drawings and the following detailed descriptions, the foregoing and other features, advantages, and aspects of embodiments of the present disclosure become more apparent. In the accompanying drawings, same or similar reference numerals indicate same or similar elements.

FIG. 1 is a diagram of an example environment in which a plurality of embodiments of the present disclosure can be implemented;
FIG. 2A and FIG. 2B are diagrams of example processes of training a decision model according to some embodiments of the present disclosure;
FIG. 3 is a diagram of an example process of training a decision model in phases according to some embodiments of the present disclosure;
FIG. 4 is a flowchart of an example process of training a decision model based on a decision scenario according to some embodiments of the present disclosure;
FIG. 5 is a flowchart of a process of an example method for training a decision model according to some embodiments of the present disclosure;
FIG. 6 is a block diagram of an apparatus for training a decision model according to some embodiments of the present disclosure; and
FIG. 7 is a block diagram of a computing device capable of implementing a plurality of embodiments of the present disclosure.

## DESCRIPTION OF EMBODIMENTS

Embodiments of the present disclosure are described in more detail in the following with reference to the accompanying drawings. Although some embodiments of the present disclosure are shown in the accompanying drawings, it should be understood that the present disclosure can be implemented in various forms, and should not be construed as being limited to embodiments described herein, and instead, these embodiments are provided for a more thorough and complete understanding of the present disclosure. It should be understood that the accompanying drawings and embodiments of the present disclosure are merely used as examples and are not intended to limit the protection scope of the present disclosure.

In descriptions of embodiments of the present disclosure, the term "include" and similar terms thereof should be understood as non-exclusive inclusions, that is, "include but are not limited to". The term "based on" should be understood as "at least partially based on". The term "one embodiment" or "this embodiment" should be understood as "at least one embodiment". The terms "first", "second", and the like may indicate different objects or a same object. Other explicit and implicit definitions may also be included below.

As briefly mentioned above, training of a decision model applicable to a complex scenario is difficult. In some examples, training a decision model through supervised learning usually requires a large amount of expert data to be collected, so that the decision model can simulate a human behavior, to obtain a human-like decision model. In addition, due to different behaviors of different experts, training data is usually distributed unevenly. In addition, the expert data usually does not include a negative sample, and a data scenario is limited. Consequently, robustness of the decision model is low, and a security risk may occur. In some other examples, although training a decision model through reinforcement learning can be independent of expert data and generalization is strong, this method requires a fine design of a reward function to train the decision model.

At present, some solutions for training a decision model by combining supervised learning and reinforcement learning have been proposed. For example, a feature extractor in the decision model may be trained through supervised learning, and a feature vector obtained by the feature extractor is used as an input of a reinforcement learning model. In this solution, the feature extractor obtained through training of supervised learning can be used, so that an accurate low-dimensional feature can be obtained, thereby reducing a data amount and time required for reinforcement learning. However, the reinforcement learning model in this solution cannot use a human policy included in expert data, and consequently efficiency of using the expert data is not high.

To at least partially resolve the above-mentioned problem and other potential problems, various embodiments of the present disclosure provide a solution for training a decision model. Overall, according to various embodiments described herein, a method for training a decision model is provided. The method includes: determining, based on training data, a first policy by using a supervised learning model in a decision model, and determining a second policy by using a reinforcement learning model in the decision model. The method further includes: determining an imitation learning loss based on a difference between the first policy and the second policy. The method further includes: training the decision model based on the imitation learning loss and a reinforcement learning loss corresponding to the second policy.

In this manner, based on both the imitation learning loss and the reinforcement learning loss, a human-like decision model with excellent performance may be obtained through training by combining a capability of supervised learning using expert data and a characteristic of strong generalization of reinforcement learning. In some embodiments, according to the solution of the present disclosure, a decision model applied to the autonomous driving field may be obtained through training, to provide a policy such as lane-changing.

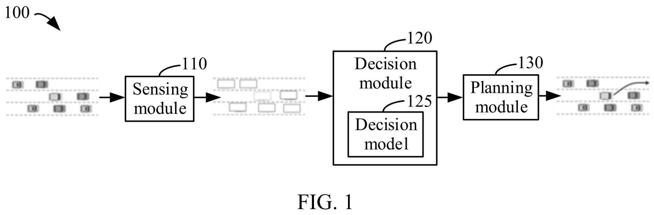

The following describes various example embodiments of the present disclosure with reference to the accompanying drawings. FIG. 1 is a diagram of an example environment 100 in which a plurality of embodiments of the present disclosure can be implemented. In FIG. 1, an example environment to which a solution for training a decision model according to the present disclosure may be applied is shown by using the autonomous driving field as an example.

An autonomous driving technology usually includes three aspects: road information sensing and inference, behavior decision-making, and route planning. As shown in FIG. 1, a sensing module 110 may process information such as an original radar and a camera of a road and a surrounding vehicle into road and vehicle information having a physical meaning. A decision module 120 may determine an upper-layer decision behavior, for example, lane-changing, overtaking, or turn-left, based on the sensed road and vehicle information. Specifically, the decision module 120 may determine a decision behavior, namely, a policy, by using a decision model 125. Examples of the policy may include left lane-changing, right lane-changing, going straight, overtaking, left-turn, right-turn, parking, acceleration, deceleration, braking, and the like. Based on the determined policy, a planning module 130 may plan a route, to control a steering wheel, a brake, and a throttle of the vehicle to implement the upper-layer decision behavior.

In some embodiments, an apparatus for training a decision model according to the present disclosure may be deployed on a vehicle having a computing capability, for example, a vehicle on which a computer system is installed. The apparatus for training a decision model according to the present disclosure may train the decision model 125 based on data collected from a vehicle and/or a real vehicle-based imitation environment. Executable code of the sensing module 110, the decision module 120 (including the decision model 125), and the planning module 130 may be stored in a storage component of the vehicle, and may be executed by a computing apparatus, for example, a processor, of the vehicle to implement a function of training and/or applying the decision model. Additionally or alternatively, the apparatus for training a decision model according to the present disclosure may be deployed in a distributed manner, for example, at least partially deployed on a remote server. It should be understood that the environment 100 shown in FIG. 1 is merely an example, and does not constitute a limitation on the scope of the present disclosure. The solution for training a decision model according to the present disclosure may be applied to other fields such as recommendation decision management.

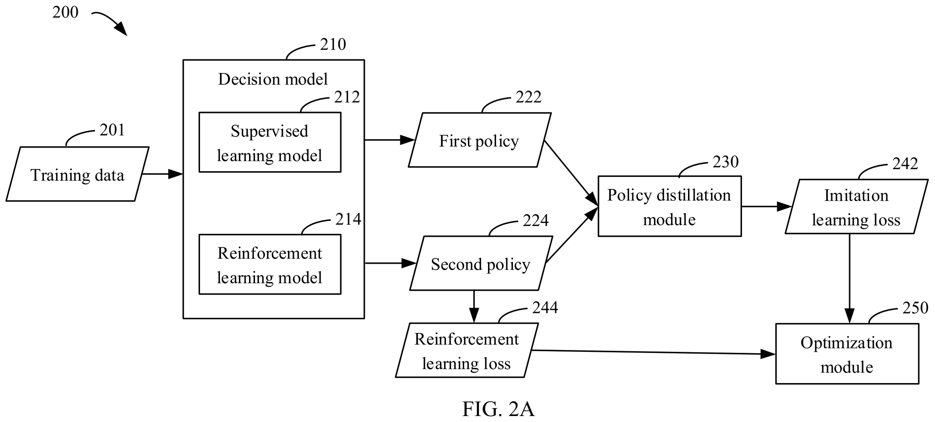

FIG. 2A is a diagram of an example process 200 of training a decision model according to some embodiments of the present disclosure. As shown in FIG. 2A, training data 201 is used to train a decision model 210. In some embodiments, the training data 201 may include labeled expert data, for example, behavior data collected from a human driver and corresponding environment data. Additionally or alternatively, the training data 201 may include data generated by a simulator. The simulator may determine behavior data based on environment data in a simulated manner. The environment data may include, for example, offline data extracted from a map. Additionally or alternatively, the environment data may include online data obtained through dynamic imitation based on a real environment of a vehicle. In some examples, the simulator may use a random policy or a policy generated by a reinforcement learning model to determine the corresponding behavior data. It should be understood that the training data generated by the simulator may include inappropriate behaviors. These behaviors may be used as negative sample data to improve robustness of the decision model 210.

As shown in FIG. 2A, the decision model 210 includes a supervised learning model 212 and a reinforcement learning model 214. The supervised learning model may be any appropriate model based on supervised learning, for example, a Transformer model, a decision tree model, or the like. The reinforcement learning model 214 may be any appropriate model based on reinforcement learning, for example, a Q-learning (Q-learning) model, a Monte Carlo model, or the like. The scope of the present disclosure is not limited in terms of specific model implementations.

Based on the training data 201, a first policy 222 is determined by using the supervised learning model 212 in the decision model 210, and a second policy 224 is determined by using the reinforcement learning model 214. It should be understood that the first policy 222 and the second policy 224 are obtained based on same input data in the training data 201. Therefore, a difference between the first policy 222 and the second policy 224 may reflect a difference between the supervised learning model 212 and the reinforcement learning model 214 when making a decision on the same input data. It may be understood that, during decision-making, the supervised learning model 212 may usually apply more human experience than the reinforcement learning model 214, and the reinforcement learning model 214 is more exploratory than the supervised learning model 212.

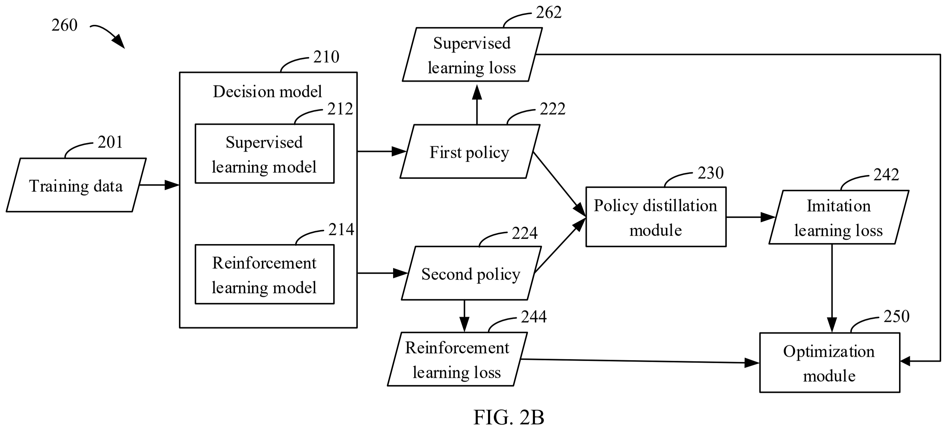

In some embodiments, the supervised learning model 212 for determining the first policy 222 may be trained. In other words, a parameter of the supervised learning model 212 has been determined based on the labeled expert data and is not updated in the training process shown in FIG. 2. Alternatively, the supervised learning model 212 for determining the first policy 222 may be trained together with the reinforcement learning model 214, and the parameter of the supervised learning model 212 is updated in the training process shown in FIG. 2.

Based on the difference between the first policy 222 and the second policy 224, a policy distillation module 230 determines an imitation learning loss 242. The imitation learning loss 242 may reflect a degree to which the reinforcement learning model 214 "simulates" the supervised learning model 212 to make a decision. For example, if the imitation learning loss 242 is small, the degree to which the reinforcement learning model 214 "simulates" the supervised learning model 212 when making a decision is high. This may also be understood as that the reinforcement learning model 214 "simulates" a human policy included in the expert data. On the contrary, if the imitation learning loss 242 is large, the degree to which the reinforcement learning model 214 "simulates" the supervised learning model 212 when making a decision is low. Based on the imitation learning loss 242 determined by the policy distillation module 230, the reinforcement learning model 214 may "distill" the policy determined by the supervised learning model 212, to learn the human experience in the expert data.

In some embodiments, depending on specific implementation of the supervised learning model 212 and the reinforcement learning model 214, the policy distillation module 230 may normalize the first policy 222 and the second policy 224, and may determine the imitation learning loss 242 based on a normalized distance between the first policy 222 and the second policy 224.

In some examples, the first policy 222 output by the supervised learning model 212 may be behavior probability distribution, for example, (0.6, 0.4, 0), where each value indicates a probability of one behavior. The second policy 224 output by the reinforcement learning model 214 may be similar probability distribution or a value of (state, behavior). If the second policy 224 is similar probability distribution, the policy distillation module 230 may determine the imitation learning loss 242 based on a vector distance between the first policy 222 and the second policy 224. If the second policy 224 is the value of (state, behavior), the policy distillation module 230 may normalize the value using a softmax function, and compute the distance between the first policy 222 and the second policy 224 by relative entropy (KL divergence), to obtain the imitation learning loss 242.

Based on the determined imitation learning loss 242 and the reinforcement learning loss 244 corresponding to the second policy 224, an optimization module 250 trains (also referred to as optimizes) the decision model 210. Depending on the specific implementation of the reinforcement learning model 214, the reinforcement learning loss 244 may be determined based on any appropriate loss function. The scope of the present disclosure is not limited herein.

The optimization module 250 trains the decision model 210 or only the reinforcement learning model 214 in the decision model 210 by minimizing a combination of the imitation learning loss 242 and the reinforcement learning loss 244. In some embodiments, the optimization module 250 may determine an adaptive weight for the imitation learning loss 242 and determine an overall learning loss based on the adaptive weight, the imitation learning loss 242, and the reinforcement learning loss 244. The optimization module 250 may train the decision model 210 by minimizing the overall learning loss. For example, the overall learning loss L may be determined with reference to the following formula (1):

$$L = \alpha * loss_{kl} + loss_{rl} \qquad (1)$$

$loss_{kl}$ indicates the imitation learning loss 242, $loss_{rl}$ indicates the reinforcement learning loss 244, and $\alpha$ indicates the adaptive weight for the imitation learning loss 242. It should be understood that the foregoing formula (1) is merely an example, and does not constitute a limitation on the present disclosure. For example, the adaptive weights may include two weights for both the imitation learning loss 242 and the reinforcement learning loss 244, and may not be embodied in a form of a coefficient.

In some embodiments, the optimization module 250 may determine an initial weight for the imitation learning loss 242 and determine the adaptive weight by gradual updating. In some embodiments, before reaching a predetermined training epoch, the optimization module 250 may update the initial weight based on a change of the imitation learning loss 242, to determine the updated weight. After reaching the predetermined epoch, the optimization module 250 may gradually decrease the updated weight.

In some examples, before the predetermined training epoch is reached, if the imitation learning loss 242 is increased, the initial weight may be increased. For example, if the imitation learning loss of an initial training epoch is less than the imitation learning loss of a subsequent training epoch, the initial weight may be increased. In some examples, the weight may be increased with reference to a formula $\alpha_n = 1.1 * \alpha_{n-1}$, where $\alpha_n$ indicates an adaptive weight of an $n^{th}$ epoch and $\alpha_{n-1}$ indicates an adaptive weight of an $(n-1)^{th}$ epoch.

On the contrary, if the imitation learning loss 242 is decreased, the initial weight may remain unchanged. For example, if the imitation learning loss 242 of an initial training epoch is greater than the imitation learning loss 242 of a subsequent training epoch, the initial weight is maintained. In some examples, after a predetermined training epoch N is reached, the weight may be gradually decreased with reference to a formula $\alpha_n = \left(2 - \dfrac{n}{N}\right) * \alpha_N$. According to this formula, an adaptive weight $\alpha_n$ is decreased to zero at a $(2N)^{th}$ epoch.

FIG. 2B is a diagram of an example process 260 of training a decision model according to some embodiments of the present disclosure. In FIG. 2B, the supervised learning model 212 for determining the first policy 222 may be trained with the reinforcement learning model 214, and the parameter of the supervised learning model 212 is updated in the training process shown in FIG. 2. In some embodiments, a supervised learning loss 262 corresponding to the first policy 222 may be determined, and the decision model 210 may be trained together based on the imitation learning loss 242, the reinforcement learning loss 244, and the supervised learning loss 262.

Through the processes 200 and 260, based on both the imitation learning loss 242 and the reinforcement learning loss 244, the human-like decision model 210 with excellent performance may be obtained through training by combining a capability of supervised learning using expert data and a characteristic of strong generalization of reinforcement learning. In addition, the adaptive weight is used, so that the reinforcement learning model 214 can focus more on "imitation" of the policy determined by the supervised learning model 212 in an early stage of training, and focus more on autonomous exploration in a later stage of training, to improve efficiency of training the decision model 210, especially the reinforcement learning model 214.

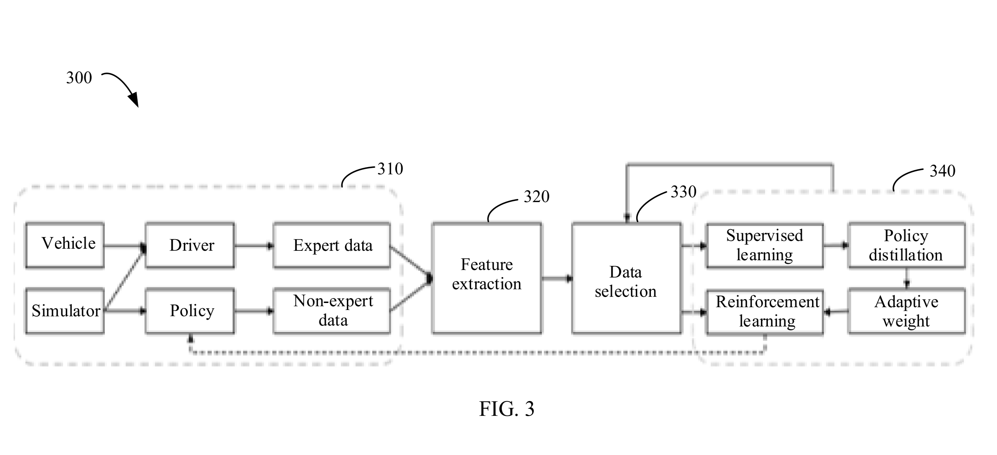

FIG. 3 is a diagram of an example process 300 of training a decision model in phases according to some embodiments of the present disclosure. It should be understood that in FIG. 3, the autonomous driving field is merely used as an example, and does not constitute a limitation on the scope of the present disclosure. As shown in FIG. 3, in a data collection phase 310, expert data and non-expert data may be collected. The expert data may include data directly collected from a human being, for example, data obtained from interaction between a human expert and an environment. In the autonomous driving field, the expert data may be collected by collecting a control behavior of a driver on a vehicle. The non-expert data may include data directly generated by a non-human being. For example, the non-expert data may be collected by using a simulator. The simulator can simulate an environment of a vehicle and apply a policy in the environment to generate a behavior of the vehicle as the non-expert data. The simulator may apply a random policy or a policy generated by a decision model to generate a behavior, of the vehicle, corresponding to the policy. In particular, the simulator may apply a policy output by a reinforcement learning model online to generate the non-expert data.

In a feature extraction phase 320, feature extraction may be performed on the collected expert data and the collected non-expert data, to obtain preprocessed training data. For example, environment data and behavior data may be converted into corresponding vector representations. In a data selection phase 330, specific data may be selected from the collected data for training the decision model in a training phase 340. For example, data of a specific decision scenario may be selected from the collected data as the training data for training the decision model, to improve performance of the decision model for the specific decision scenario.

In some embodiments, a supervised learning model in the decision model may be first trained by using labeled expert data, and the supervised learning model is tested in a test set, to determine inference performance of the supervised learning model trained based on the expert data. The inference performance may indicate prediction policy quality for each of a plurality of decision scenarios. For example, the inference performance of the supervised learning model may indicate prediction policy quality for a lane-changing scenario, a braking scenario, and a turning scenario separately.

Based on the obtained inference performance, a data selection module may be used to select, from the collected data, the training data used to train the decision model or the reinforcement learning model. The data selection module may determine, based on the inference performance of the supervised learning model, distribution of data that is in the training data and that corresponds to the plurality of decision scenarios. For example, for a specific decision scenario in which prediction policy quality is poor, data of the decision scenario may be increased to the training data, to be used to improve inference performance of the decision model in a directional manner.

Additionally or alternatively, the training data may be updated based on the inference performance of the reinforcement learning model, to be used to improve the inference performance of the decision model in a subsequent training epoch in a directional manner. Specifically, the inference performance of the reinforcement learning model obtained through previous training may be determined, where the inference performance indicates prediction policy quality for each of the plurality of decision scenarios. Based on the inference performance of the reinforcement learning model, distribution of data that is in the training data and that corresponds to the plurality of decision scenarios may be updated, to determine updated training data. Based on the updated training data, the decision model may be further trained, so that the inference performance of the decision model for the specific decision scenario is improved.

In the training phase 340, as described above with reference to FIG. 2, the decision model may be trained in combination with both supervised learning and reinforcement learning. Specifically, policy distillation may be used to enable the reinforcement learning model to "simulate" a decision manner of the supervised learning model, to inherit, to the reinforcement learning model, the policy obtained through supervised learning. In addition, a degree of "imitation" may be adjusted based on the adaptive weight, so that the reinforcement learning model focuses more on imitation of the policy obtained by the supervised learning model in a start phase of training, and gradually reduces the degree of imitation, to increase generalization of the decision model.

In some embodiments, the training phase 340 may include an offline training phase and an online training phase. In the offline training phase, the supervised learning model may be trained based on the expert data. In the online training phase, the policy output by the reinforcement learning model can be applied to the simulator, to generate the non-expert data. The non-expert data may be used as a part of the training data, and is used to further train the reinforcement learning model in the subsequent training epoch. In this manner, the simulator may be used to increase a training data amount, and the training data amount may be increased for the specific decision scenario, to more efficiently train the decision model.

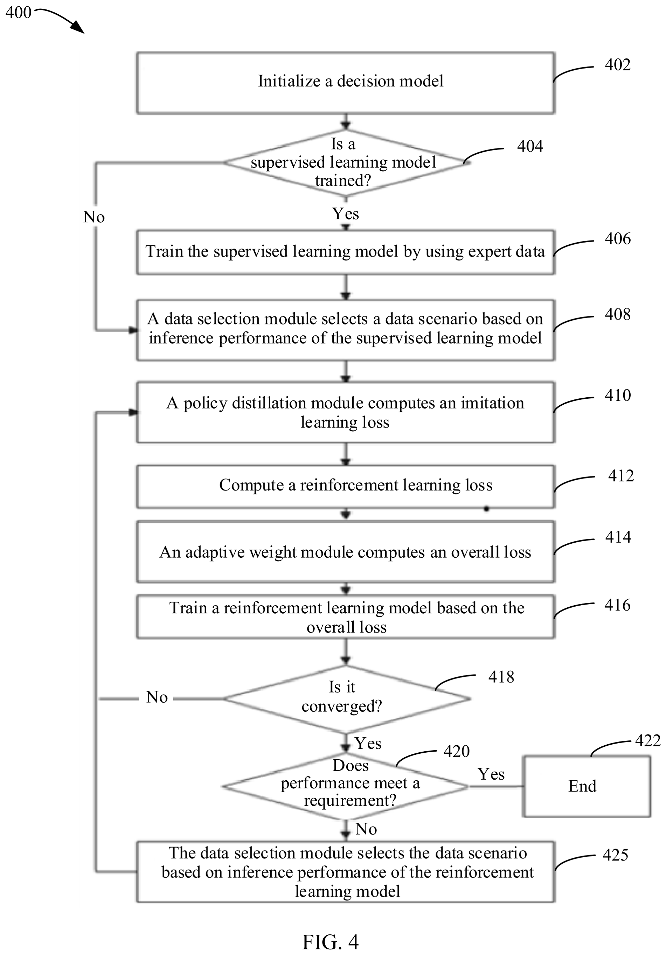

FIG. 4 is a flowchart of an example process 400 of training a decision model based on a decision scenario according to some embodiments of the present disclosure. Refer to FIG. 4. The following describes application of a solution for training the decision model according to the present disclosure in the autonomous driving field. An apparatus for training the decision model may be deployed on a vehicle, and may determine training data by collecting an operation behavior of a human driver and through imitation of a simulator. The trained decision model may determine a policy in a plurality of decision scenarios. Examples of the decision scenario may include decision scenarios respectively requiring left lane-changing, right lane-changing, and going straight. The trained decision model is used, when there is an obstacle vehicle or a slow vehicle in front, an appropriate target lane may be selected based on a current overall road condition, for example, an instruction for left lane-changing, right lane-changing, or going straight is sent, to maximize traffic efficiency. The following describes in detail a process of training the decision model.

As shown in FIG. 4, the decision model may be initialized in a block 402. Parameters, for example, dimensions and activation functions of a neural network, of a supervised learning model and a reinforcement learning model may be initialized. Additionally or alternatively, a parameter, for example, a dimension of a behavior, related to a decision task may be input. In some examples, the dimension of the behavior may be set to 3 to respectively represent left lane-changing, right lane-changing, and going straight. Additionally or alternatively, an adaptive weight and a parameter for updating the weight, for example, a predetermined training epoch N, may be initialized.

In the block 404, whether the supervised learning model needs to be trained may be determined. In some embodiments, if the supervised learning model needs to be trained, the process 400 may proceed to a block 406 to train the supervised learning model by using expert data. In the block 406, the supervised learning model may be trained by using any feasible supervised learning loss function. Examples of the supervised learning loss function include but are not limited to, a mean square error (mean square error), a cross entropy (cross entropy), and the like.

On the contrary, if the trained supervised learning model can be directly used, the process 400 may proceed to a block 408. In the block 408, a data selection module may test inference performance of the supervised learning model, and determine distribution of data in a particular decision scenario (also referred to as determining a data scenario) based on the inference performance. In some embodiments, decision scenarios requiring respectively corresponding left lane-changing, right lane-changing, and going straight may be set. The data selection module may adjust distribution of training data in a next training epoch based on prediction policy quality of the supervised learning model for these decision scenarios.

For example, when the supervised learning model performs poorly in a specific decision scenario, a ratio of the decision scenario may be increased in the training data. As a nonlimiting example, adjustment may be performed in a manner of increasing 10% data when a pass rate is reduced by 10%, and minimum adjustment is 10%. For example, if pass rates of the decision scenarios requiring left lane-changing, right lane-changing, and going straight are respectively 80%, 80%, and 50%, a data ratio of the going straight scenario may be increased, and a data ratio of the three decision scenarios may be determined as 100%: 100%: 130%.

In a block 410 to a block 420, the decision model may be trained (or only the reinforcement learning model may be trained) based on the determined training data. Specifically, in the block 410, a policy distillation module may compute an imitation learning loss. The policy distillation module may determine the imitation learning loss based on a difference between a first policy output by the supervised learning model and a second policy output by the reinforcement learning model. In the block 412, the reinforcement learning loss can be computed. For example, a Q-value learning method may be used to compute a reinforcement learning loss.

In the block 414, an adaptive weight module may compute an overall learning loss based on the imitation learning loss and the reinforcement learning loss. For example, the overall learning loss may be computed with reference to the foregoing formula (1). In the block 416, the reinforcement learning model may be trained based on the overall learning loss. In the block 418, whether training is converged may be determined. If training is not converged, the process 400 may return to the block 410 for a next epoch of training.

On the contrary, if training has been converged, the process 400 may proceed to the block 420. In the block 420, whether the inference performance of the reinforcement learning decision model meets a requirement may be determined. If the inference performance meets the requirement, training may be ended in a block 422. On the contrary, if the inference performance does not meet the requirement, the process 400 may proceed to a block 425. In the block 425, the data selection module may select a data scenario based on the inference performance of the reinforcement learning model, to adjust distribution of data in the training data. For example, if pass rates for decision scenarios requiring left lane-changing, right lane-changing, and going straight are increased from 80%, 80%, 50% to 80%, 80%, and 60%, a data ratio for the decision scenarios requiring left lane-changing, right lane-changing, and going straight may be reduced from 100%:100%:130% to 100%:100%:120%.

Through the process 400, supervised learning and reinforcement learning may be combined to obtain a human-like decision model with excellent performance through training. In addition, distribution of data, in training data, for a specific decision scenario may be adjusted based on inference performance of the supervised learning model and/or the reinforcement learning model, so that the decision model may be trained based on the decision scenario, to improve the inference performance of the decision model in a directional manner.

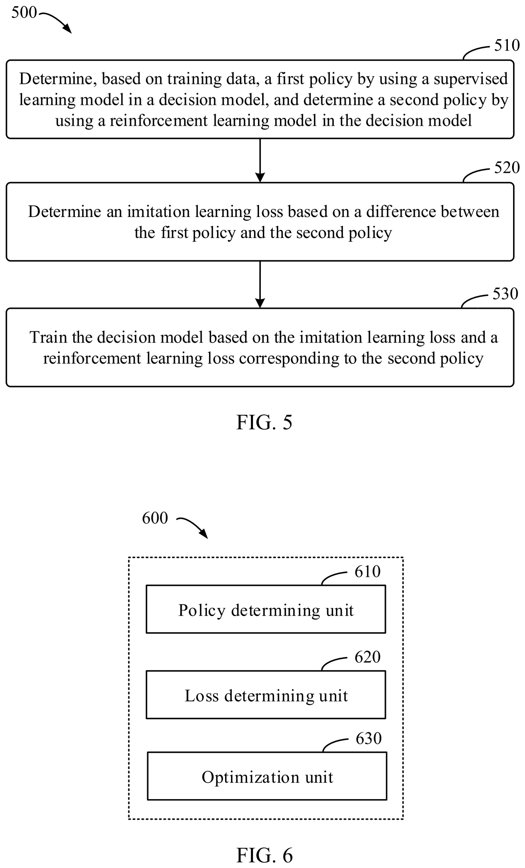

FIG. 5 is a flowchart of a process 500 of an example method for training a decision model according to some embodiments of the present disclosure. In a block 510, based on training data, a first policy is determined by using a supervised learning model in a decision model, and a second policy is determined by using a reinforcement learning model in the decision model. In a block 520, an imitation learning loss is determined based on a difference between the first policy and the second policy. In a block 530, the decision model is trained based on the imitation learning loss and a reinforcement learning loss corresponding to the second policy.

In some embodiments, that the decision model is trained based on the imitation learning loss and the reinforcement learning loss corresponding to the second policy includes: determining an adaptive weight for the imitation learning loss; determining an overall learning loss based on the adaptive weight, the imitation learning loss, and the reinforcement learning loss; and training the decision model by minimizing the overall learning loss.

In some embodiments, determining the adaptive weight for the imitation learning loss includes: determining an initial weight for the imitation learning loss; before a predetermined training epoch is reached, updating the initial weight based on a change of the imitation learning loss, to determine an updated weight; and after the predetermined training epoch is reached, gradually decreasing the updated weight.

In some embodiments, updating the initial weight based on a change of the imitation learning loss includes: if the imitation learning loss of an initial training epoch is less than the imitation learning loss of a subsequent training epoch, increasing the initial weight; and if the imitation learning loss of an initial training epoch is greater than the imitation learning loss of a subsequent training epoch, maintaining the initial weight.

In some embodiments, the method further includes: training the supervised learning model based on labeled expert data; determining inference performance of the supervised learning model trained based on the expert data, where the inference performance indicates prediction policy quality for each of a plurality of decision scenarios; and determining, based on the inference performance of the supervised learning model, distribution of data that is in the training data and that corresponds to the plurality of decision scenarios.

In some embodiments, determining the imitation learning loss based on the difference between the first policy and the second policy includes: normalizing the first policy and the second policy; and determining the imitation learning loss based on a normalized distance between the first policy and the second policy.

In some embodiments, the method further includes: generating at least a part of the training data by using a simulator. In some embodiments, generating at least the part of the training data by using the simulator includes: generating, by using the simulator based on at least one of a policy determined by the reinforcement learning model or a random policy, a behavior corresponding to at least one of the policy or the random policy as at least a part of the training data.

In some embodiments, the method further includes: determining inference performance of the reinforcement learning model, where the inference performance indicates prediction policy quality for each of a plurality of decision scenarios; updating, based on the inference performance of the reinforcement learning model, distribution of data that is in the training data and that corresponds to the plurality of decision scenarios, to determine updated training data; and training the decision model based on the updated training data.

**In** some embodiments, the training the decision model includes: determining a supervised learning loss corresponding to the first policy; and training the decision model based on the imitation learning loss, the reinforcement learning loss, and the supervised learning loss.

**In** some embodiments, the method further includes: determining a driving policy based on driving-related input data by using the trained decision model or the trained reinforcement learning model, where the driving policy includes at least one of the following: left lane-changing, right lane-changing, going straight, overtaking, left-turn, right-turn, parking, acceleration, deceleration, and braking.

According to the solution of the present disclosure, the decision model may be trained in combination with advantages of supervised learning and reinforcement learning. For example, the supervised learning model may be first trained by using offline expert data, to obtain a human-like expert model. Then, a policy of the expert model can be inherited as an initial solution of the reinforcement learning model through a policy distillation module. In addition, the data selection module is used, so that directional improvement for the decision scenario may be implemented based on the policy of the expert model, to obtain a human-like decision model with excellent performance.

### Example apparatus and device

FIG. 6 is a block diagram of an apparatus 600 for training a decision model according to an embodiment of the present disclosure. The apparatus 600 may include a plurality of modules, configured to perform corresponding steps in the process 500 discussed in FIG. 5. The apparatus 600 may be deployed on a vehicle-mounted device (for example, a head unit), to improve decision performance of autonomous driving software. The apparatus 600 includes: a policy determining unit 610, configured to determine, based on training data, a first policy by using a supervised learning model in a decision model, and determine a second policy by using a reinforcement learning model in the decision model; a loss determining unit 620, configured to determine an imitation learning loss based on a difference between the first policy and the second policy; and an optimization unit 630, configured to train the decision model based on the imitation learning loss and a reinforcement learning loss corresponding to the second policy.

In some embodiments, the optimization unit 630 is further configured to: determine an adaptive weight for the imitation learning loss; determine an overall learning loss based on the adaptive weight, the imitation learning loss, and the reinforcement learning loss; and train the decision model by minimizing the overall learning loss.

In some embodiments, the optimization unit 630 is further configured to: determine an initial weight for the imitation learning loss; before a predetermined training epoch is reached, update the initial weight based on a change of the imitation learning loss, to determine an updated weight; and after the predetermined training epoch is reached, gradually decrease the updated weight.

In some embodiments, the optimization unit 630 is further configured to: if the imitation learning loss of an initial training epoch is less than the imitation learning loss of a subsequent training epoch, increase the initial weight; and if the imitation learning loss of an initial training epoch is greater than the imitation learning loss of a subsequent training epoch, maintain the initial weight.

In some embodiments, the apparatus 600 further includes a training data determining unit. The training data determining unit is configured to: train the supervised learning model based on labeled expert data; determine inference performance of the supervised learning model trained based on the expert data, where the inference performance indicates prediction policy quality for each of a plurality of decision scenarios; and determine, based on the inference performance of the supervised learning model, distribution of data that is in the training data and that corresponds to the plurality of decision scenarios.

In some embodiments, the apparatus 600 further includes a simulator using unit. The simulator using unit is configured to: generate at least a part of the training data by using a simulator. In some embodiments, the simulator using unit is further configured to: generate, by using the simulator based on at least one of a policy determined by the reinforcement learning model or a random policy, a behavior corresponding to at least one of the policy or the random policy as at least a part of the training data.

In some embodiments, the apparatus 600 further includes a directional optimization unit. The directional optimization unit is configured to: determine inference performance of the reinforcement learning model, where the inference performance indicates prediction policy quality for each of a plurality of decision scenarios; update, based on the inference performance of the reinforcement learning model, distribution of data that is in the training data and that corresponds to the plurality of decision scenarios, to determine updated training data; and train the decision model based on the updated training data.

In some embodiments, the loss determining unit 620 is further configured to: normalize the first policy and the second policy; and determine the imitation learning loss based on a normalized distance between the first policy and the second policy.

In some embodiments, the optimization unit 630 is further configured to: determine a supervised learning loss corresponding to the first policy; and train the decision model based on the imitation learning loss, the reinforcement learning loss, and the supervised learning loss.

In some embodiments, the apparatus 600 further includes a decision model using unit. The decision model using unit is configured to: determine a driving policy based on driving-related input data by using the trained decision model or the trained reinforcement learning model, where the driving policy includes at least one of the following: left lane-changing, right lane-changing, going straight, overtaking, left-turn, right-turn, parking, acceleration, deceleration, and braking.

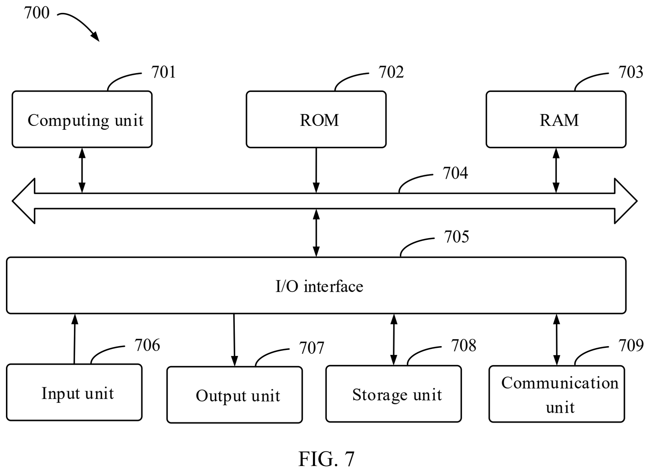

FIG. 7 is a block diagram of an example of a device 700 that may be used to implement an embodiment of the present disclosure. As shown, the device 700 includes a computing unit 701. The computing unit 701 may perform various appropriate actions and processing based on computer program instructions stored in a random access memory (RAM) 703 and/or a read-only memory (ROM) 702 or computer program instructions loaded from a storage unit 708 into the RAM 703 and/or the ROM 702. The RAM 703 and/or the ROM 702 may further store various programs and data required for an operation of the device 700. The computing unit 701 and the RAM 703 and/or the ROM 702 are connected to each other through a bus 704. An input/output (I/O) interface 705 is also connected to the bus 704.

A plurality of components in the device 700 are connected to the I/O interface 705, and include: an input unit 706, for example, a keyboard or a mouse; an output unit 707, for example, various types of displays or speakers; a storage unit 708, for example, a magnetic disk or an optical disc; and a communication unit 709, for example, a network adapter, a modem, or a wireless communication transceiver. The communication unit 709 allows the device 700 to exchange information/data with another device through a computer network, for example, the internet, and/or various telecommunication networks.

The computing unit 701 may be various general-purpose and/or dedicated processing components having processing and computing capabilities. Some examples of the computing unit 701 include but are not limited to: a central processing unit (CPU), a graphics processing unit (GPU), various dedicated artificial intelligence (AI) computing chips, various computing units running machine learning model algorithms, a digital signal processor (DSP), and any appropriate processor, controller, and microcontroller. The computing unit 701 performs the methods and processing described above, for example, the process 500. For example, in some embodiments, the process 500 may be implemented as a computer software program. The computer software program is tangibly included in a machine-readable medium, for example, the storage unit 708. In some embodiments, the computer program may be partially or completely loaded and/or installed onto the device 700 through the RAM and/or the ROM and/or the communication unit 709. When the computer program is loaded into the RAM and/or the ROM and executed by the computing unit 701, one or more steps of the process 500 described above may be performed. Alternatively, in another embodiment, the computing unit 701 may be configured to perform the process 500 in any other appropriate manner (for example, by using firmware).

All or some of the foregoing embodiments may be implemented by using software, hardware, firmware, or any combination thereof. When the software is used for implementation, all or some of embodiments may be implemented in a form of a computer program product. The computer program product includes one or more computer instructions. When the computer program instructions are loaded and executed on a server or a terminal, all or some of the procedures or functions based on embodiments of this application are generated. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial optical cable, an optical fiber, or a digital subscriber line) or wireless (for example, infrared, radio, or microwave) manner. The computer-readable storage medium may be any usable medium accessible by a server or a terminal, or a data storage device, for example, a server or a data center, integrating one or more usable media. The usable medium may be a magnetic medium (for example, a floppy disk, a hard disk, and a magnetic tape), or may be an optical medium (for example, a digital video disk (digital video disk, DVD)), or a semiconductor medium (for example, a solid-state drive).

In addition, although operations are described in a particular order, it should be understood that it is required that the operations are performed in the shown particular order or in sequence, or it is required that all the operations shown in the figures should be performed to achieve an expected result. In a specific environment, multi-task and parallel processing may be advantageous. Similarly, although several specific implementation details are included in the foregoing descriptions, these should not be construed as limiting the scope of the present disclosure. Some features described in the context of a separate embodiment may alternatively be implemented in combination in a single implementation. On the contrary, various features described in the context of a single implementation may alternatively be implemented in a plurality of implementations separately or in any appropriate sub-combination.

Although the subject matter is described in a language specific to structural features and/or method logic actions, it should be understood that the subject matter defined in the appended claims is not necessarily limited to the particular features or actions described above. On the contrary, the particular features and actions described above are merely example forms for implementing the claims.

**Claims**

1. A method for training a decision model, wherein the method comprises:

   determining, based on driving-related training data, a first policy by using a supervised learning model in a decision model, and determining a second policy by using a reinforcement learning model in the decision model;
   determining an imitation learning loss based on a difference between the first policy and the second policy; and
   training the decision model based on the imitation learning loss and a reinforcement learning loss corresponding to the second policy.

2. The method according to claim 1, wherein training the decision model based on the imitation learning loss and the reinforcement learning loss corresponding to the second policy comprises:

   determining an adaptive weight for the imitation learning loss;
   determining an overall learning loss based on the adaptive weight, the imitation learning loss, and the reinforcement learning loss; and
   training the decision model by minimizing the overall learning loss.

3. The method according to claim 2, wherein determining the adaptive weight for the imitation learning loss comprises:

   determining an initial weight for the imitation learning loss;
   before a predetermined training epoch is reached, updating the initial weight based on a change of the imitation learning loss, to determine an updated weight; and
   after the predetermined training epoch is reached, gradually decreasing the updated weight.

4. The method according to claim 3, wherein updating the initial weight based on the change of the imitation learning loss comprises:

   if the imitation learning loss of an initial training epoch is less than the imitation learning loss of a subsequent training epoch, increasing the initial weight; and
   if the imitation learning loss of an initial training epoch is greater than the imitation learning loss of a subsequent training epoch, maintaining the initial weight.

5. The method according to any one of claims 1 to 4, further comprising:

   training the supervised learning model based on labeled expert data;
   determining inference performance of the supervised learning model trained based on the expert data, wherein the inference performance indicates prediction policy quality for each of a plurality of decision scenarios; and
   determining, based on the inference performance of the supervised learning model, distribution of data that is in the training data and that corresponds to the plurality of decision scenarios.

6. The method according to any one of claims 1 to 5, wherein determining the imitation learning loss based on the difference between the first policy and the second policy comprises:

   normalizing the first policy and the second policy; and
   determining the imitation learning loss based on a normalized distance between the first policy and the second policy.

7. The method according to any one of claims 1 to 6, further comprising:
   generating at least a part of the training data by using a simulator.

8. The method according to claim 7, wherein generating at least the part of the training data by using the simulator comprises:
   generating, by using the simulator based on at least one of a policy determined by the reinforcement learning model or a random policy, a behavior corresponding to at least one of the policy or the random policy as at least a part of the training data.

9. The method according to any one of claims 1 to 8, further comprising:

determining inference performance of the reinforcement learning model, wherein the inference performance indicates prediction policy quality for each of a plurality of decision scenarios; updating, based on the inference performance of the reinforcement learning model, distribution of data that is in the training data and that corresponds to the plurality of decision scenarios, to determine updated training data; and training the decision model based on the updated training data.

10. The method according to any one of claims 1 to 9, wherein training the decision model comprises:

determining a supervised learning loss corresponding to the first policy; and training the decision model based on the imitation learning loss, the reinforcement learning loss, and the supervised learning loss.

11. The method according to any one of claims 1 to 10, further comprising: determining a driving policy based on driving-related input data by using the trained decision model or the trained reinforcement learning model, wherein the driving policy comprises at least one of the following: left lane-changing, right lane-changing, going straight, overtaking, left-turn, right-turn, parking, acceleration, deceleration, and braking.

12. An apparatus for training a decision model, comprising:

a policy determining unit, configured to determine, based on driving-related training data, a first policy by using a supervised learning model in a decision model, and determine a second policy by using a reinforcement learning model in the decision model; a loss determining unit, configured to determine an imitation learning loss based on a difference between the first policy and the second policy; and an optimization unit, configured to train the decision model based on the imitation learning loss and a reinforcement learning loss corresponding to the second policy.

13. The apparatus according to claim 12, wherein the optimization unit is further configured to:

determine an adaptive weight for the imitation learning loss; determine an overall learning loss based on the adaptive weight, the imitation learning loss, and the reinforcement learning loss; and train the decision model by minimizing the overall learning loss.

14. The apparatus according to claim 13, wherein the optimization unit is further configured to:

determine an initial weight for the imitation learning loss; before a predetermined training epoch is reached, update the initial weight based on a change of the imitation learning loss, to determine an updated weight; and after the predetermined training epoch is reached, gradually decrease the updated weight.

15. The apparatus according to claim 14, wherein the optimization unit is further configured to:

if the imitation learning loss of an initial training epoch is less than the imitation learning loss of a subsequent training epoch, increase the initial weight; and if the imitation learning loss of an initial training epoch is greater than the imitation learning loss of a subsequent training epoch, maintain the initial weight.

16. The apparatus according to any one of claims 12 to 15, further comprising a training data determining unit, wherein the training data determining unit is configured to:

train the supervised learning model based on labeled expert data; determine inference performance of the supervised learning model trained based on the expert data, wherein the inference performance indicates prediction policy quality for each of a plurality of decision scenarios; and determine, based on the inference performance of the supervised learning model, distribution of data that is in the training data and that corresponds to the plurality of decision scenarios.

17. The apparatus according to any one of claims 12 to 16, further comprising a simulator using unit, wherein the simulator using unit is configured to: generate at least a part of the training data by using a simulator.

18. The apparatus according to claim 17, wherein the simulator using unit is further configured to:
generate, by using the simulator based on at least one of a policy determined by the reinforcement learning model or a random policy, a behavior corresponding to at least one of the policy or the random policy as at least a part of the training data.

19. The apparatus according to any one of claims 12 to 18, further comprising a directional optimization unit, wherein the directional optimization unit is configured to:

determine inference performance of the reinforcement learning model, wherein the inference performance indicates prediction policy quality for each of a plurality of decision scenarios;
update, based on the inference performance of the reinforcement learning model, distribution of data that is in the training data and that corresponds to the plurality of decision scenarios, to determine updated training data; and
train the decision model based on the updated training data.

20. An electronic device, comprising:

at least one computing unit; and
at least one memory, wherein the at least one memory is coupled to the at least one computing unit and stores instructions executed by the at least one computing unit; and when the instructions are executed by the at least one computing unit, the electronic device is enabled to perform the method according to any one of claims 1 to 11.

21. A computer-readable storage medium, wherein the computer-readable storage medium stores a computer program; and when the program is executed by a processor, the method according to any one of claims 1 to 11 is implemented.

22. A computer program product, comprising computer-executable instructions, wherein when the computer-executable instructions are performed by a processor, the method according to any one of claims 1 to 11 is implemented.

100

110

120

Decision
module

125

Decision
model

130

Sensing
module

Planning
module

FIG. 1

FIG. 2A

FIG. 2B

FIG. 3

400

```
┌──────────────────────────────────────────────┐
│          Initialize a decision model          │─── 402
└──────────────────────────────────────────────┘
                      │
                      ▼
              ◇ Is a                ─── 404
         supervised learning model
                 trained?
   No ◄──────┘         │ Yes
      │                ▼
      │   ┌──────────────────────────────────────────────┐
      │   │ Train the supervised learning model by using  │─── 406
      │   │                expert data                     │
      │   └──────────────────────────────────────────────┘
      │                │
      │                ▼
      │   ┌──────────────────────────────────────────────┐
      └──►│ A data selection module selects a data scenario│─── 408
          │ based on inference performance of the          │
          │          supervised learning model             │
          └──────────────────────────────────────────────┘
                       │
                       ▼
          ┌──────────────────────────────────────────────┐
       ┌─►│ A policy distillation module computes an       │─── 410
       │  │           imitation learning loss              │
       │  └──────────────────────────────────────────────┘
       │               │
       │               ▼
       │  ┌──────────────────────────────────────────────┐
       │  │   Compute a reinforcement learning loss        │─── 412
       │  └──────────────────────────────────────────────┘
       │               │
       │               ▼
       │  ┌──────────────────────────────────────────────┐
       │  │ An adaptive weight module computes an overall  │─── 414
       │  │                   loss                         │
       │  └──────────────────────────────────────────────┘
       │               │
       │               ▼
       │  ┌──────────────────────────────────────────────┐
       │  │ Train a reinforcement learning model based on  │─── 416
       │  │              the overall loss                  │
       │  └──────────────────────────────────────────────┘
       │               │
       │               ▼
       │          ◇ Is it           ─── 418
       │           converged?
       │  No ◄──────┘    │ Yes
       │                 ▼
       │          ◇ Does              ─── 420         ┌──────────┐
       │      performance meet a    Yes ─────────────►│   End    │─── 422
       │        requirement?                           └──────────┘
       │                 │ No
       │                 ▼
       │  ┌──────────────────────────────────────────────┐
       └──│ The data selection module selects the data     │─── 425
          │ scenario based on inference performance of the │
          │          reinforcement learning model          │
          └──────────────────────────────────────────────┘
```

FIG. 4

500 ⌇

┌─────────────────────────────────────────────────────────┐ ⌐ 510
│ Determine, based on training data, a first policy by using a supervised │
│ learning model in a decision model, and determine a second policy by │
│ using a reinforcement learning model in the decision model │
└─────────────────────────────────────────────────────────┘

↓

┌─────────────────────────────────────────────────────────┐ ⌐ 520
│ Determine an imitation learning loss based on a difference between │
│ the first policy and the second policy │
└─────────────────────────────────────────────────────────┘

↓

┌─────────────────────────────────────────────────────────┐ ⌐ 530
│ Train the decision model based on the imitation learning loss and a │
│ reinforcement learning loss corresponding to the second policy │
└─────────────────────────────────────────────────────────┘

FIG. 5

600 ⌇

┌─────────────────────────────────────────┐
│  ┌───────────────────────────────┐ ⌐ 610 │
│  │     Policy determining unit      │      │
│  └───────────────────────────────┘      │
│  ┌───────────────────────────────┐ ⌐ 620 │
│  │      Loss determining unit       │      │
│  └───────────────────────────────┘      │
│  ┌───────────────────────────────┐ ⌐ 630 │
│  │       Optimization unit          │      │
│  └───────────────────────────────┘      │
└─────────────────────────────────────────┘

FIG. 6

700

701 Computing unit

702 ROM

703 RAM

704

705 I/O interface

706 Input unit

707 Output unit

708 Storage unit

709 Communication unit

FIG. 7

## INTERNATIONAL SEARCH REPORT

| International application No. |
|---|
| **PCT/CN2024/073076** |

### A. CLASSIFICATION OF SUBJECT MATTER

G06N20/00(2019.01)i

According to International Patent Classification (IPC) or to both national classification and IPC

### B. FIELDS SEARCHED

Minimum documentation searched (classification system followed by classification symbols)

IPC: G06N

Documentation searched other than minimum documentation to the extent that such documents are included in the fields searched

Electronic data base consulted during the international search (name of data base and, where practicable, search terms used)

CNTXT, ENTXTC, DWPI, VEN, CJFD, 必应, BING, CSDN, CNKI: Q值学习, 贝叶斯, 动态规划, 分类, 回归, 驾驶, 监督学习, 决策树, 逻辑回归, 蒙特卡洛, 模型, 强化学习, 时间差分, 随机森林, 损失, 训练, 蒸馏, 策略, 策略蒸馏, 支持向量机, KNN, Q, learn, Bayesian, dynamic, program, classify, drive, supervise, decision, make, tree, logistic, regression, Monte, Carlo, model, reinforce, temporal, difference, random, forest, loss, train, distill, policy, transformer, SVM.

### C. DOCUMENTS CONSIDERED TO BE RELEVANT

| Category* | Citation of document, with indication, where appropriate, of the relevant passages | Relevant to claim No. |
|---|---|---|
| A | CN 113835421 A (HUAWEI TECHNOLOGIES CO., LTD.) 24 December 2021 (2021-12-24) description, paragraphs 0186-0268 | 1-22 |
| A | CN 111461226 A (SHENZHEN QIANHAI WEBANK CO., LTD.) 28 July 2020 (2020-07-28) entire document | 1-22 |
| A | CN 112508164 A (BEIHANG UNIVERSITY) 16 March 2021 (2021-03-16) entire document | 1-22 |
| A | CN 113110550 A (NANJING UNIVERSITY) 13 July 2021 (2021-07-13) entire document | 1-22 |
| A | CN 113343979 A (BEIJING BAIDU NETCOM SCIENCE AND TECHNOLOGY CO., LTD.) 03 September 2021 (2021-09-03) entire document | 1-22 |
| A | CN 113962362 A (BEIJING BAIDU NETCOM SCIENCE AND TECHNOLOGY CO., LTD.) 21 January 2022 (2022-01-21) entire document | 1-22 |

☑ Further documents are listed in the continuation of Box C.　　☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **26 March 2024** | **11 April 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2024/073076** |

### C. DOCUMENTS CONSIDERED TO BE RELEVANT

| Category* | Citation of document, with indication, where appropriate, of the relevant passages | Relevant to claim No. |
|---|---|---|
| A | CN 114404977 A (TENCENT TECHNOLOGY (SHENZHEN) CO., LTD.) 29 April 2022 (2022-04-29)<br>entire document | 1-22 |
| A | US 2020090048 A1 (DEEPMIND TECHNOLOGIES LIMITED) 19 March 2020 (2020-03-19)<br>entire document | 1-22 |
| A | US 2023107539 A1 (SAMSUNG ELECTRONICS CO., LTD.) 06 April 2023 (2023-04-06)<br>entire document | 1-22 |

Form PCT/ISA/210 (second sheet) (July 2022)

### INTERNATIONAL SEARCH REPORT
**Information on patent family members**

International application No.

**PCT/CN2024/073076**

| Patent document cited in search report | | | Publication date (day/month/year) | Patent family member(s) | | | Publication date (day/month/year) |
|---|---|---|---|---|---|---|---|
| CN | 113835421 | A | 24 December 2021 | CN | 113835421 | B | 15 December 2023 |
| | | | | WO | 2021244207 | A1 | 09 December 2021 |
| CN | 111461226 | A | 28 July 2020 | | None | | |
| CN | 112508164 | A | 16 March 2021 | CN | 112508164 | B | 10 January 2023 |
| CN | 113110550 | A | 13 July 2021 | CN | 113110550 | B | 23 September 2022 |
| CN | 113343979 | A | 03 September 2021 | CN | 113343979 | B | 08 November 2022 |
| CN | 113962362 | A | 21 January 2022 | | None | | |
| CN | 114404977 | A | 29 April 2022 | HK | 40071022 | A0 | 04 November 2022 |
| US | 2020090048 | A1 | 19 March 2020 | US | 2022083869 | A1 | 17 March 2022 |
| | | | | WO | 2018211138 | A1 | 22 November 2018 |
| | | | | WO | 2018211138 | A8 | 26 December 2019 |
| | | | | EP | 3602412 | A1 | 05 February 2020 |
| | | | | JP | 2020521205 | A | 16 July 2020 |
| | | | | JP | 6854921 | B2 | 07 April 2021 |
| | | | | US | 11132609 | B2 | 28 September 2021 |
| | | | | CN | 110892418 | A | 17 March 2020 |
| US | 2023107539 | A1 | 06 April 2023 | WO | 2023059106 | A1 | 13 April 2023 |
| | | | | EP | 4324241 | A1 | 21 February 2024 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310413264